# EUROPEAN PATENT SPECIFICATION

(11) **EP 4 639 281 B1**
(45) Date of publication and mention of the grant of the patent: **16.09.2026**
(21) Application number: 23828171.1
(22) Date of filing: 13.12.2023
(51) Int. Cl.: G02F 1/35, G02F 1/365

(54) **A SUPERCONTINUUM LIGHT SOURCE AND A SCATTEROMETRY DEVICE**
SUPERKONTINUUMSLICHTQUELLE UND STREUMESSUNGSVORRICHTUNG
SOURCE DE LUMIÈRE SUPERCONTINUUM ET DISPOSITIF DE DIFFUSIOMÉTRIE

(30) Priority: 22.12.2022 EP 22216005
(43) Date of publication of application: 29.10.2025
(73) Proprietor: Hamamatsu Photonics A/S, 3460 Birkerød (DK)
(72) Inventor: MOLTKE, Asbjørn Meldgaard, 2800 Kgs. Lyngby (DK); ANDERSEN, Thomas Vestergaard, 3460 Birkerød (DK); PEDERSEN, Martin Erland Vestergaard, 3460 Birkerød (DK); SMITH, Cameron Lesley Colwell, 3460 Birkerød (DK); BANG, Ole, 3460 Birkerød (DK)
(74) Representative: Zacco Denmark A/S
(86) International application number: PCT/EP2023/085603
(87) International publication number: WO 2024/132780

(56) References cited:
- EP-A1- 3 913 429
- WO-A1-2013/178232
- WO-A1-2022/135823
- WO-A1-2022/194477
- SMITH CALLUM R. ET AL: "Spectral broadening of ultraviolet dispersive waves in gas-filled hollow-core fiber using pump pulse modulation", vol. 45, no. 24, 14 December 2020 (2020-12-14), US, pages 6744, XP093054029, ISSN: 0146-9592, Retrieved from the Internet <URL:https://opg.optica.org/view_article.cfm?pdfKey=3ba35288-8c0c-47db-a94d77555204e668_444732> DOI: 10.1364/OL.412652

## Description

### Field of the invention

The present disclosure relates generally to a supercontinuum light source, more specifically to a modulated supercontinuum light source. Further, the present disclosure relates to a scatterometry device comprising a supercontinuum light source.

### Background

Broadband optical light sources are used in many applications, for example in Optical Coherence Tomography (OCT), fluorescence microscopy or spectroscopy. There may arise situations in which the application of a broadband optical light source is limited by the minimum power spectral density (PSD) of the generated broadband light that is available in a desired wavelength range.

To solve this problem, US 2016/0164242 and US 2009/095890 disclose a modulator being used to modulate the pump laser radiation in a supercontinuum system, whereby the PSD becomes flatter.

The application, US 2021/0364885, discloses also a modulator being used to modulate pump laser radiation comprising a train of radiation pulses to provide modulated pump laser radiation, whereby a supercontinuum radiation source is provided with both scaled PSD and high uniformity of the average output power.

The article, "Spectral broadening of ultraviolet dispersive waves in gas-filled hollow-core fiber using pump pulse modulation", in Optics Letters, Vol. 45, No. 24/15 December 2020, by Callum R. Smith et al. discloses also a modulator being used to modulate the pump laser radiation in a supercontinuum system, whereby the PSD of a part of the ultra-violet (UV) spectrum becomes flatter.

WO 2013/178232, US 2021/0364885 and the article by Callum R. Smith disclose that a broader and flatter spectrum directly benefits spectroscopic scatterometry, particularly because the flatter spectrum ensures suitable power levels over a wider bandwidth.

However, although the prior art disclose that the PSD of a supercontinuum light source may be optimized, such as by optimizing the pulses of the modulator, for example such that it is suitable for scatterometry, none of the prior art discloses an actual optimal solution.

In view of the above, there is a desire to provide a light source and/or a device, such as for scatterometry, which is optimized to provide a very broad and flat spectrum.

### Summary

It is an objective of this disclosure to provide a light source and a device that is optimized to provide a very broad and flat spectrum.

Further, it is an objective of this disclosure to provide an understanding on how to optimize a light source and a device such that its spectrum becomes very broad and flat.

These and other objectives have been solved by the light source and device as defined in the claims and as described below in the present disclosure.

In one aspect of the disclosure, there is disclosed a supercontinuum light source, comprising:
- a pulsed light source configured to emit a train of light-pulses;
- a modulation-module configured to modulate the train of light-pulses, thereby producing a modified train of light-pulses, wherein the modified train of light-pulses comprise a plurality of modified light-pulses, wherein each of the plurality of modified light-pulses is defined by at least:
   ∘ a peak-power, P₀, and
   ∘ a pulse width, T₀, and;
- one or more non-linear element(s) being defined by at least:
   ∘ a non-linear coefficient, γ, and
   ∘ a group-velocity dispersion parameter, β₂,
   whereby each of the plurality of modified light-pulses entering the non-linear element(s) is defined by:
   ∘ a soliton number, N, where N²= T₀²γ P₀/|β₂|.

Further, said non-linear element(s) is/are configured to spectrally broadening the plurality of modified light-pulses, thereby generating a train of supercontinuum-pulses. Even further, the plurality of modified light-pulses entering the non-linear element is further defined by having:
∘ a maximum soliton-number, Nₘₐₓ, and
∘ a minimum soliton-number, Nₘᵢₙ.

Preferably, the plurality of modified light-pulses is modified such that:
∘ the pulse soliton-modulation-depth, dN = (Nₘₐₓ-Nₘᵢₙ)/(Nₘₐₓ+ Nₘᵢₙ), is larger than 6%.

The soliton-number, N, is a well-known defined quantity, see for example the article "Measurement of the soliton number in guiding media through continuum generation", Optics Letters, Vol. 45, Issue 16, pp. 4432-4435 (2020), by David Castelló -Lurbe et al, also explaining how the coefficient γ /β₂ can be directly measured.

The prior art, as cited in the background section, does not disclose the soliton number, N, in relation to modulating the pump laser radiation. However, some of the prior art, such as the article by Callum R. Smith et al, discloses instead only the pulse energy, E₀, and the pulse width, T₀, and not specific values for γ/β₂.

However, since the coefficient, γ/β_{2,} is a constant for a given non-linear element, such as an optical fiber or waveguide, the expression for dN, as here disclosed, may be written as: $\begin{matrix}dN & = \left({N}_{max}-{N}_{min}\right) / \left({N}_{max}+{N}_{min}\right) \\ & = \left|\left({T}_{0 , max}{{P}_{0 , max}}^{1 / 2}-{T}_{0 , min}{{P}_{0 , min}}^{1 / 2}\right)\right| / \left({T}_{0 , max}{{P}_{0 , max}}^{1 / 2}+{T}_{0 , min}{{P}_{0 , min}}^{1 / 2}\right) .\end{matrix}$

Further, since P₀ is proportional to E₀/T₀, the above expression may be rewritten as: $dN = \left|\left({\left({T}_{0 , max}{E}_{0 , max}\right)}^{1 / 2}-{\left({T}_{0 , min}{E}_{0 , min}\right)}^{1 / 2}\right)\right| / \left({\left({T}_{0 , max}{E}_{0 , max}\right)}^{1 / 2}+{\left({T}_{0 , min}{E}_{0 , min}\right)}^{1 / 2}\right) .$

With this expression, one may easily compare a given setup, where for example only the energies E_{0,max} and E_{0,min} and the related pulse widths T_{0,max} and T_{0,min}, respectively, are known, with the herein disclosed light source.

In relation to the above expression, it is to be noted that just because the maximum pulse energy E_{0,max} is maximum, it is not given that the related pulse width, T_{0,max} is also maximum. Accordingly, it is also to be noted that just because the minimum pulse energy E_{0,max} is minimum, it is not given that the related pulse width, T_{0,min} is a minimum. In other words, the maximum for E₀ and T₀ may not belong together. With this in mind, it is possible, with the above expression, to switch Nₘₐₓ and Nₘᵢₙ. It is for this reason why the nominator in the above expression has an absolute value.

To avoid switching Nₘₐₓ and Nₘᵢₙ, and to generalize the expression, the above expression is rewritten as: $dN \left({E}_{0}, {T}_{0}\right) = \left({N}_{max}\left({E}_{0}, {T}_{0}\right)-{N}_{min}\left({E}_{0}, {T}_{0}\right)\right) / \left({N}_{max}\left({E}_{0}, {T}_{0}\right)+{N}_{min}\left({E}_{0}, {T}_{0}\right)\right) ,$ where Nₘₐₓ(E₀, T₀) > Nₘᵢₙ(E₀, T₀) and Nₘₐₓ(E₀, T₀) = max(E₀T₀) and Nₘᵢₙ(E₀, T₀) = min(E₀T₀).

In other words, Nₘₐₓ(E₀, T₀) is provided by the product of E₀T₀ that yields a maximum, whereas Nₘᵢₙ(E₀, T₀) is provided by the product of E₀T₀ that yields a minimum. It is to be noted that neither Nₘₐₓ(E₀, T₀) nor Nₘᵢₙ(E₀, T₀) are to be referred as the maximum soliton number Nₘₐₓ or the minimum soliton number Nₘᵢₙ, but only a number that is proportional thereto. However, in the calculation of dN, the proportionally factors cancel out, so it does not matter that Nₘₐₓ(E₀, T₀) and Nₘᵢₙ(E₀, T₀) are only proportional to the soliton-number, N.

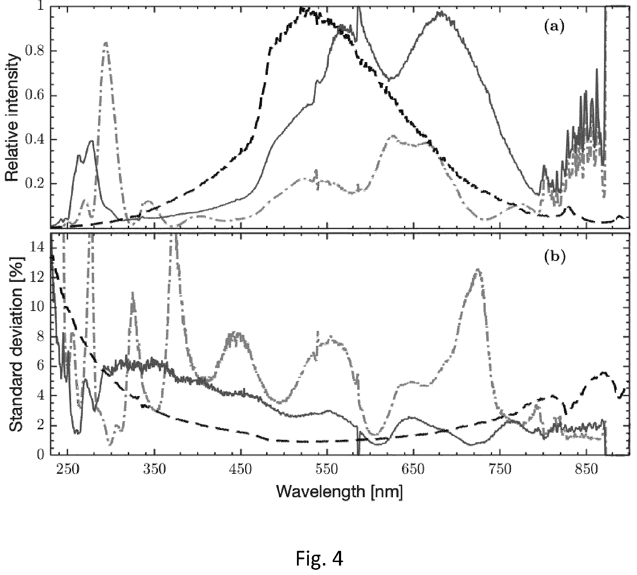

To provide an example of how to calculate dN when only E and T are known, the article by Callum R. smith et al., and the therein disclosed modulation scheme, is consulted. In this article, it is seen from Fig. 4(c) that a pulse sequence has pulses with a first pulse energy of E_{0,1} = 17.4 µJ and a related pulse width of T_{0,1} = 32.2 fs (obtained from C5 in Fig. 4.(c)). The product of these two values is N₁ = 560.28 µJ fs. It is also seen that a pulse sequence of Fig. 4(c) has pulses with a second pulse energy of E_{0,2} = 13.1 µJ and a related pulse width of T_{0,2} = 59.9 fs (obtained from C1 in Fig. 4.(c). The product of these two values is N₂ = 784.69 µJ fs. Accordingly, Nₘₐₓ = N₂, and Nₘᵢₙ=N₁. With these values, dN is calculated to be dN = 5.5%. This is the maximum dN as is derivable from the article by Callum R. smith et al. which is lower than the presently disclosed value of dN being larger than 6%.

None of the other prior art documents, as described in the background section, disclose specific values for the pulse energy or maximum pulse power and the related pulse width, and therefore cannot be compared to the presently disclosed light source.

The inventors of the present disclosure have found that when using the pulse soliton-modulation-depth, dN, according to the present disclosure, and a spectrometer to measure the average output power of the supercontinuum light source over a time-period of less than 60 seconds, such as less than 5 seconds, such as less than 1 second, which in one embodiment defines a measured spectrum, then the PSD becomes particularly uniform and with high values in the entire measured spectrum. The measured spectrum may in one embodiment range from the visible domain and into the UV domain. The UV domain may in one embodiment range from 100 nm to less than 400 nm, such as to 380 nm.

More specifically, the inventors have found when using the pulse soliton-modulation-depth, dN, according to the present disclosure, then the measured spectrum may be with powers or intensities that may be above the noise-floor of a spectrometer, or more accurately within the dynamic range of the spectrometer.

Stated differently, by the present disclosure, the inventors have found a solution to raise the measured spectrum to above the noise-floor of a spectrometer. In a preferred embodiment, the measured spectrum spans more than a part of the UV-domain, or more than the visible domain. Most specifically, the inventors have found that when the pulse soliton-modulation depth, dN, is as specified according to the present disclosure, then dN is responsible for eliminating regions within the measured spectrum of very low power and correspondingly high noise to increase the overall signal-to-noise ratio (SNR).

A spectrum with the characteristics as described above is well-suited for scatterometry for example. Accordingly, the present disclosure provides a measured spectrum, which is particularly applicable in scatterometry.

Hence, in a second aspect of the present disclosure, there is provided a scatterometry device, comprising:
- the supercontinuum light source according to the first aspect; and
- a spectrometer configured to measure the spectrum of the train of super-continuum-pulses, whereby a measured spectrum is provided.

### Brief description of the drawings

The above and/or additional objects, features and advantages of the present disclosure, will be further described by the following illustrative and non-limiting detailed description of embodiments of the present disclosure, with reference to the appended drawing(s), wherein:
**Fig. 1** shows an example of how light-pulses with different energies generate a supercontinuum spectrum at the output of a fiber with a fixed length.
**Fig. 2** shows an example of a plurality of modified light-pulses according to the present disclosure.
**Fig. 3** shows an example of four individual spectra (colored curves) and the composite modulated spectrum (black curve) generated by the modified train of pulses as exemplified in **Fig. 2****.**
**Fig. 4** shows in (a) an example of a spectrum generated by a modulated supercontinuum light source according to the present disclosure (green curve) in comparison to a spectrum generated by a non-modulated source (yellow curve) and a plasma lamp (black curve). In (b) is shown the corresponding standard deviation.
**Fig. 5** shows an example of a supercontinuum light source according to the present disclosure.

### Detailed description

### Non-linear element(s)

In one embodiment, the one or more non-linear element(s) is a single hollow-core fiber. In some embodiments, the hollow-core fiber has a length that is less than 1 m, preferably less than 0.5, most preferably around 30 cm.

More preferably, in another embodiment, the one or more non-linear element(s), such as a single hollow-core fiber, is filled with a gas, most preferably a noble gas, such as Argon or Neon. A gas-filled hollow-core fiber may be responsible for spectrally broadening the plurality of modified light-pulses into the UV domain. In a most preferred embodiment, the non-linear element is filled with a gas under pressure, for example a pressure of more than 1 bar, more than 2 bars, more than 3 bars, or more than 4 bars. The pressure and/or the type of gas may be adjusted according to providing a desired wavelength in the UV-domain. For example, to provide a spectrum that spans from around 210 nm and up to 900 nm, it may be found that the non-linear element(s) may be filled with Argon at a pressure to above 4 bars. In combination with the disclosed dN, the full spectrum (i.e. from 210 nm to 900 nm) is raised to a level that is higher than if the modulation would have been turned off, or if the modulation would be with dN of less than the presently disclosed dN.

In yet another embodiment, the one or more non-linear element(s) comprise(s) a non-linear fiber, such as a solid-core photonic crystal fiber, and/or a hollow-core fiber, and/or a gas-filled hollow-core fiber, and/or a solid-core step-index fiber, and/or a graded-index fiber, and/or a ZBLAN fiber, and/or a tellurite fiber, and/or a chalcogenide fiber. The nonlinear fiber may for example be made of or comprise silica.

In some embodiments, the one or more non-linear element(s) comprise(s) a non-linear crystal.

### Pulsed light source and modulation-module

In one embodiment, each of pulses in the train of light-pulses emitted from the pulsed light source is defined by a center wavelength being between 1000 nm and 1100 nm, preferably around 1030 nm or 1064 nm. In some embodiments, the light source is an Ytterbium laser.

In another embodiment, each of the pulses in the train of light-pulses emitted from the pulsed light source is defined by a center wavelength being between 700 nm and 900 nm, preferably around 800 nm. For example, to deliver such a center wavelength, the pulsed light source may be a Ti:Sapphire laser.

In yet another embodiment, each of the pulses in the train of light-pulses emitted from the pulsed light source is defined by a center wavelength being around 2 microns. For example, to deliver such a center wavelength, the pulsed light source may be a Thulium laser.

The pulsed light source, which may also be referred to as a pulse generator, may be a laser or a laser diode. The pulses from the pulsed light source are sometimes referred to as seed pulses.

In one embodiment, the pulses from the pulsed light source are provided by a repetition rate, such that the separation of pulses is less than 100 µs, more preferably around 10 µs.

In another embodiment, the pulses from the pulsed light source are provided by a repetition rate between 10 kHz and 10 MHz, preferably between 50 kHz and 200 kHz, more preferably around 80 kHz and 120 kHz, most preferably around 100 kHz.

In yet another embodiment, the pulses from the pulsed light source are provided by a pulse width, or a pulse duration, of less than 1000 fs, more preferably less than 500 fs, most preferably around 300 fs.

In an alternative embodiment, the pulses from the pulsed light source are provided by a pulse width, or a pulse duration, of between 10 fs and 100 fs, preferably between 20 fs and 40 fs, most preferably around 30 fs.

In a preferred embodiment, the pulsed light source is configured to generate pulses, wherein the maximum pulse energy of the pulses is less than 100 µJ, such as around 40 µJ.

In another preferred embodiment, the pulsed light source is configured to generate pulses, wherein the minimum pulse energy of the pulses is more than 10 µJ, such as around 40 µJ.

In some embodiments, the pulsed light source is configured to generate pulses, wherein the minimum pulse energy of the pulses is more 100 µJ, preferably more than 1000 µJ.

In one embodiment, the modulation-module is partly or fully integrated in the pulsed light source.

In another embodiment, the modulation-module is a waveform generator, wherein the waveform generator is configured to modulate an operational parameter of the pulsed light source. The operational parameter may for example be an electrical current used to drive the pulsed light source, such as a laser diode or a master oscillator power amplifier (MOPA).

In yet another embodiment, the modulation-module is configured for acting on the train of pump pulses, for example in the form of an attenuator, an amplifier, or any other device that can modify the peak power and/or pulse length of a pulse passing through the device. The modulation-module may be placed between the pulsed light source and the nonlinear element(s).

In some embodiments, the modulation-module comprises an acousto-optic modulator. A modulation-module like this may be fully integrated in the pulsed light source. The modulation-module may comprise several units, for example both an acousto-optic modulator and a temporal compression stage. In such a case, and for example where the temporal compression stage is neither fully nor partly integrated in the pulsed light source, but where the acoustio-optic modulator is fully integrated in the pulsed light source, the modulation-module is said to be partly integrated in the pulsed light source.

In one embodiment, the modulation-module comprises a temporal compression stage configured to modify the pulse width, T₀, of each of the pulses in the train of light-pulses or in the train of modified light-pulses, whereby each of the pulses defined by Nₘᵢₙ obtains a modified first pulse width, T₁, and whereby each of the pulses defined by Nₘₐₓ obtains a modified second pulse width, T₂, wherein T₁ is different from T₂. By modifying the pulse width of each of the pulses in the train of light-pulses or in the train of modified light-pulses, the temporal compression stage may also spectrally broaden said light-pulses. Accordingly, in one embodiment, the temporal compression state is configured to spectrally broadening said light-pulses.

In a related embodiment, the temporal compression stage comprises an additional non-linear element, such as a hollow-core fiber. Such a hollow-core fiber may in a preferred embodiment be configured to spectrally broadening the train of light-pulses emitted from the pulsed light source, and further configured to form of a linear chirp across each of the light-pulses. In some embodiments, the hollow-core fiber, of the temporal compression stage, has a length that is less than 1 m, preferably less than 0.5, most preferably around 30 cm.

In another related embodiment, the temporal compression stage comprises a chirp-compensator. Such a chirp-compensator, for example configured to compensate for linear chirp, may for example comprise one or more mirrors, such as one or more dispersive mirrors. In a preferred embodiment, the chirp-compensator comprises two dispersive mirrors.

In yet another related embodiment, the first pulse width, T₁, is smaller than the second pulse width, T₂, preferably by a factor 1/2 or less, most preferably by a factor of 1/3 or less.

In some related embodiments, the first pulse width, T₁, and the second pulse width, T₂, are between 1 fs and 1000 fs.

In a most preferred embodiment, the first pulse width, T₁, and the second pulse width, T₂, are modified with the temporal compression stage such that each of the light-pulses defined by Nₘₐₓ are spectrally broadened primarily into the visible domain, and such that each of the pulses defined by Nₘᵢₙ are spectrally broadened into the ultraviolet (UV) domain. The spectral broadening, as here disclosed, may for example take place when the temporal compression stage comprises a hollow-core fiber. Furthermore, and more specifically, the spectral broadening, as here disclosed, may for example take place when the hollow-core fiber, of the temporal compression stage, has a length of less than 1 m, such as less than 0.5 m, such as around 30 cm. Such a length may namely be responsible for preventing a maximum temporal compression, whereby the UV-edge is extended further towards lower wavelengths when the maximum soliton number, Nₘₐₓ, is increased.

In some embodiments, the visible domain and ultraviolet domain being generated by the spectral broadening combines to an extended spectrum that ranges from around 210 nm or less, and up to at least 900 nm, preferably up to at least 1000 nm, more preferably up to at least 2400 nm, most preferably up to at least 4000 nm.

### Pulse soliton-modulation-depth

The pulse soliton-modulation-depth, dN, is defined in terms of the soliton number, N. As previously described, the soliton number is a well-known quantity, which is also able to be measured.

The coefficients, γ and β₂, are determined by the non-linear element(s), whereas the peak-power, P₀, and the pulse width, T₀ are characteristics of the pulses.

The non-linear element(s) may change the characteristics of the light-pulses, such as for example spectrally broadening the light-pulses. For this reason, and in most embodiments, the soliton number is measured before the non-linear element(s). This means that the peak-power, P₀, and the pulse width, T₀, in most embodiments are measured before the light pulses are being transmitted into the non-linear element(s), meaning after the modulation-module.

The coefficients γ and β₂ may be known prior to using the supercontinuum light source, for example, they may be pre-measured from within the non-linear element(s), or measured during the use of the supercontinuum light source. Regardless of how the coefficients are measured, the coefficients γ and β₂ are by definition measurable. Accordingly, the soliton number, comprising γ and β₂, may be measured after the modulation-module, particularly due to the location of the non-linear element(s) being placed after the modulation-module.

In embodiments when the modulation-module comprises a temporal compression stage, the soliton number, particularly T₀ and E₀, may be measured at a location that is after the temporal compression stage.

In a preferred embodiment, the dN is larger than 10%, more preferably larger than 13%, most preferably larger than 16%, most preferably larger than 19%. An advantage of having such a large dN is not only to generate a wide spectrum, such as ranging from the visible domain and into the UV domain and/or IR domain, but also to raise the spectrum above a given noise floor, whereby the full potential, or the dynamic range, of a spectrometer is fully exploited, while at the same time to lower the SNR.

The inventors of the present disclosure have found that in some embodiments, if dN is enlarged too much, the desired wavelengths are not generated. For this reason, the inventors of the present disclosure have found an optimum. Accordingly, in another preferred embodiment, the dN is smaller than 45%, more preferably smaller than 40%, most preferably smaller than 35%, most preferably smaller than 30%.

An optimum for dN may be ranging from more than 10% to less than 45%, more preferably from more than 13% to less than 40%, most preferably from more than 16% to less than 35%, most preferably from more than 19% to less than 30%.

In a most preferred embodiment, the dN is responsible for generating the train of supercontinuum-pulses with wavelengths ranging from around 210 nm or less, and up to at least 900 nm, preferably up to at least 1000 nm, more preferably up to at least 2400 nm, most preferably up to at least 4000 nm.

### Plurality of modified light-pulses

According to the present disclosure, the modified light-pulses are transmitted into the one or more non-linear element(s). Each of the modified light-pulses in the nonlinear element(s) may lead to the generation of an output pulse with a broadband optical spectrum, i.e. the train of supercontinuum-pulses. The PSD of such a spectrum is a function of wavelength and may depend on the peak-power and/or pulse length of the pulse used to generate the output pulse.

If two pulses of the modified light-pulses have different peak-powers and/or pulse lengths, the PSD profile over wavelength of the generated output pulses may be different. The inventors of the present disclosure have found that if the peak powers and pulse lengths of the pump pulses are set properly, a gap in the PSD profile of one of the generated output pulses may be compensated by the PSD profile provided by the other generated output pulse.

In one embodiment, for example to compensate for gaps in the PSD profile, the plurality of modified light-pulses is further defined, or set, by having intermediate soliton-numbers, Nᵢₙₜ, wherein Nₘᵢₙ < Nᵢₙₜ < Nₘₐₓ.

Preferably, each of the pulses having the intermediate soliton numbers are spectrally broadened into a domain that is predominantly in the ultraviolet (UV) domain.

The inventors of the present disclosure have found that such modified light-pulses further provide an optimal compromise between a complete spectral coverage, use of the dynamic range of a spectrometer, a spectral edge in the UV-domain, and the effective repetition rate.

If a detector, for example present in a spectrometer, is used to detect the PSD of the plurality of output pulses over wavelength, it is usually not able to resolve the individual output pulses, but effectively detects an average PSD from the pulses that arrive at the detector in succession. The average PSD may thereby correspond to the average of the PSDs of the plurality of pulses. The plurality of modified light-pulses may for example have a particular repetition rate. The term "repetition rate" as used herein also applies to a sequence of pulses in which the individual pulses may have different peak powers. In the detected average PSD, a gap in a wavelength range of a PSD from one output pulse may be averaged out by the PSD of the other output pulse, such as having Nᵢₙₜ. Accordingly, by providing light-pulses having Nᵢₙₜ, an averaged optical spectrum with an improved PSD may be obtained.

In most embodiments, the light-pulses in the plurality of modified light-pulses are separated from each other by a time span, which is larger than the shortest pulse width in the plurality of modified light-pulses, preferably by a factor of 2 or more, more preferably by a factor of 10 or more, even more preferably by a factor of 100 or more, such as 1000 or more, most preferably by a factor of 10000 or more. Having a separation as here disclosed may generate a spectrum that is both wide, and has high intensities in the entire spectrum, while also being flat. Further, the use of non-overlapping pump pulses with different peak powers and/or pulse lengths, according to the present disclosure, provides that the PSD averaged over the respective output pulses may be increased - at least in a desired wavelength range, while the peak powers of the plurality of modified light-pulses may be kept at a relatively low level. By keeping a relatively low level of peak-powers, and separating the light pulses as here disclosed, the lifetime of the non-linear element(s) may further be increased.

In a preferred embodiment, the plurality of modified light-pulses is defined by a repetitive pattern, i.e. a periodic structure, having a subset of pulses, n, such that the subset of pulses, n, comprises one or more pulses, n₁, said pulses being defined by Nₘₐₓ, and one or more pulses, n₂, said pulses being defined by Nₘᵢₙ. Using the repetitive pattern as here disclosed, for example as an alternative to a non-repetitive pattern, such as a chaotic pattern with other pulses, has been found to be more efficient in generating the desired raised and flat spectrum. Furthermore, using the repetitive pattern, with the presently disclosed dN, has been found to generate a spectrum that spans into the UV-domain, i.e. a spectrum with wavelengths ranging from 210 nm or less, and up to 400 nm. Even further, when the repetitive pattern is as disclosed, it may produce intensities within the measured spectrum, such as ranging from 210 nm and up to 900 nm, that are well above zero for all wavelengths in the UV-domain, but also well above zero for the wavelengths up to 900 nm. Also, when the repetitive pattern is as disclosed, it may produce a measured spectrum, such as ranging from 210 nm and up to 900 nm, that has a standard deviation below 10%, or below 8%, or below 7%, preferably below 5%. The reason why the repetitive pattern, as here disclosed may produce a flat spectrum as disclosed above, is because the periodic structure of the modified train of light pulses is selected such that: (a) a first power spectral density of the measured spectrum for a first region of wavelengths in the UV-domain is increased in comparison to not modulating the pulse-property with the modulation-module, and (b) a second power spectral density of the measured spectrum for a second region of wavelengths in the UV-domain is decreased in comparison to not modulating the pulse-property with the modulation-module.

In a more preferred embodiment, the subset of pulses, n, is between n=10 and n=20 pulses, preferably around n=15 pulses, and/or wherein the first number of pulses, n₁, is larger than the second number of pulses, n₂, preferably by a factor of 2 or more, more preferably by a factor of 3 or more, more preferably by a factor of 4 or more, most preferably by a factor of 5 or more. For example, in an embodiment, where the plurality of modified light-pulses is n=15 pulses, there may be a first number of pulses being n₁=10 pulses, for example having Nₘₐₓ and a second number of pulses being n₂=2 pulses, for example having Nₘᵢₙ. The remaining n=3 modified light-pulses may be defined, or set, by having intermediate soliton numbers, Nᵢₙₜ. In a most preferred embodiment, the intermediate soliton number, Nᵢₙₜ, vary. The 10 out of 15 pulses with Nₘᵢₙ may be responsible for forming the light in the visible domain, and the 2 out of 15 pulses with Nₘₐₓ may be responsible for forming light in the ultraviolet domain.

The inventors of the present disclosure have found that the subset of light-pulses, defining a repetitive pattern, may be repeated several times within an integration time of a detector or spectrometer configured to measure the spectrum of the supercontinuum light transmitted by the presently disclosed supercontinuum light source.

Accordingly, in another embodiment, the subset of light-pulses is repeated P times within an integration time of a detector or spectrometer configured to measure the spectrum of the train of supercontinuum-pulses, where P is an integer. The spectrometer may for example be the spectrometer comprised by the scatterometry device according to the second aspect of the present disclosure.

The minimum integration time of a detector or spectrometer may be in the order of milli-seconds, such as less than 50 ms, such as less than 10 ms, such as less than 5 ms. Having a sufficiently high repetition rate of the pulses, such as in the order of microseconds, means that even with a minimum integration time as described above, the subset of pulses may be repeated up to P=1000 times. For this reason, there may be a near infinite number of ways of ordering the light pulses while conserving the ratio of the pulses. The inventors of the present disclosure have found that the ordering of the light pulses, by inspecting a finite number of ways, did neither change the generated spectrum nor the standard deviation, i.e. the flatness, of the spectrum.

Accordingly, in some embodiments, the P repeated subset of light-pulses are re-ordered. For example, the re-ordering may be such that all the light-pulses having Nₘₐₓ, or a part thereof, are grouped together, and/or all the light-pulses having Nₘᵢₙ, or a part thereof, are grouped together, and/or all of the light-pulses having Nᵢₙₜ, or a part thereof are grouped together. While this re-ordering may neither change the generated spectrum nor the flatness of the spectrum, the re-ordering may have other effects, such as extending the lifetime of the pulsed light source. For example, if the pulsed light source, such as a laser diode, is modulated by an integrated modulation-module, such as by controlling the electrical current used to drive the pulsed light source, then a rapid shift between high and low electric currents may damage the pulsed light source. By then re-ordering the pulses, as described above, the rapid shift between high and low electric current may no longer be present, and thus prevent the pulsed light source from being damaged.

### Scatterometry device

In one embodiment, the scatterometry device is configured to hold an object to be analyzed by scatterometry such that the train of supercontinuum-pulses are guided from the one or more non-linear element(s) and onto the object, wherefrom the train of supercontinuum-pulses are further guided into the spectrometer.

As previously described, the measured spectrum by the scatterometry device may in one embodiment be provided by measuring the average output power, or average output intensity, of the supercontinuum light source over a time-period of less than 1 second. However, in another embodiment, the measured spectrum by the scatterometry device may be provided by measuring the average output power of the supercontinuum light source over a time-period of less than 100 ms, such as less than 50 ms, such as less than 10 ms, such as less than 5 ms. The time-period as here defined may correspond to the integration time of the spectrometer.

In a most preferred embodiment, the spectrometer of the scatterometry device comprises a detector, wherein the detector is a silicon-based detector. Such a detector may be responsive in the wavelength range from 200 nm and up to 1100 nm, which is therefore optimal for scatterometry and the presently disclosed supercontinuum light source.

### Examples

### Example 1 - Generation of supercontinuum

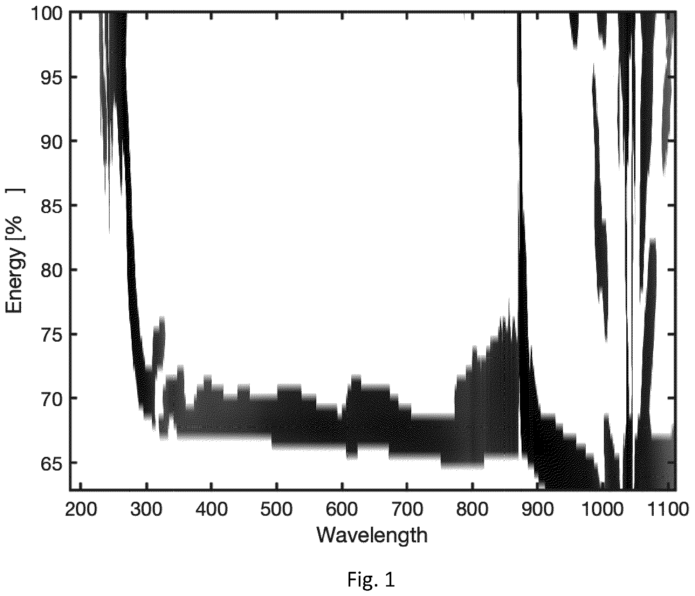

**Fig. 1** shows an example of where light-pulses with relatively low energy, Eₘᵢₙ, are used to generate visible light, and pulses with relatively high energy, Eₘₐₓ, are used to generate ultraviolet light. **Fig. 1** shows more specifically the development of a supercontinuum spectrum as a function of the pump energy in an experimental setup having the supercontinuum light source according to the present disclosure. From **Fig. 1** it is seen that the wavelengths in the visible domain (from around 400 nm to 700 nm) are generated by light-pulses having relatively low energy (around 70% of the maximum energy), whereas the wavelengths in the ultraviolet domain (below 380 nm), are generated by light-pulses having relatively high energy (around 70% to 100% of the maximum energy). Accordingly, from **Fig. 1****,** and in view of the difference in energy, dE, it may be deduced that when dE is small, one can generate light in either the UV-domain (by only having pulses with relatively high energy) or in the visible domain and an upper part of the UV-domain, for example from around 300 nm and to around 380 nm (by only having pulses with relatively low energy). Wavelengths in the near infrared (NIR) domain, from around 700-1100 nm may be generated by having pulses with energies between 65% to 70% of the maximum energy. As can be understood from **Fig. 1****,** a supercontinuum light source having wavelengths in both the visible domain and the near infrared domain may be generated by having dE, thus also dN, rather small. However, as can also be deduced from **Fig. 1****,** a supercontinuum light source having wavelengths in both the visible and the UV domain may be generated by having a relatively large dN. According to the present disclosure, the inventors have found than when dN is larger than 6%, the spectrum becomes very flat and with a PSD that is above the noise floor of a given spectrometer and/or detector. Further, in one embodiment, as for example shown in and understood by **Fig. 1****,** the presently claimed dN may also be responsible for generating light having wavelengths in both the visible domain and the UV domain, even extending into the IR domain.

### Example 2 - Plurality of modified light-pulses

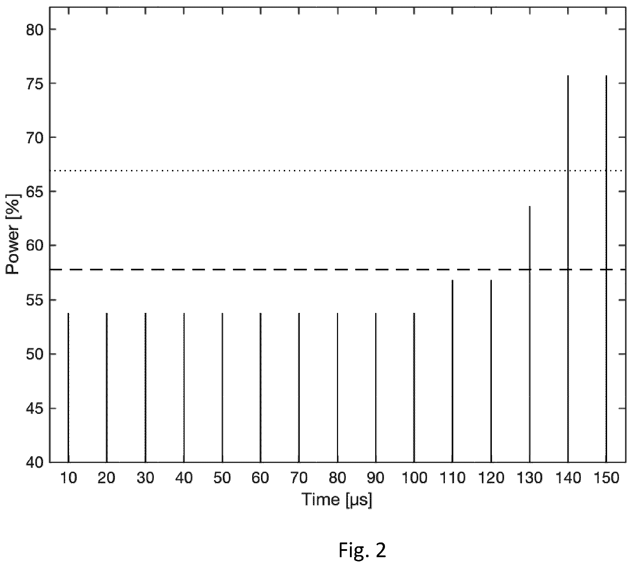

**Fig. 2** shows an example of a plurality of modified light-pulses according to the present disclosure. From **Fig. 2****,** it can be seen that each of the modified light pulses is defined by at least a peak-power, P₀, and a pulse width, T₀. In the present example, the pulse width, T₀, of each pulse is in the order of femtoseconds, such as between 10 and 100 femtoseconds. The present example shows that each pulse in the train of pulses is separated from each other by a time span, which is larger than the minimum pulse width, here around 10 femtoseconds. Since the separation of pulses is around 10 µs, the time span is larger than the width of each pulse by a factor of around 1000. Furthermore, as can be seen from **Fig. 2****,** the plurality of modified light-pulses is defined by a repetitive pattern having a subset of pulses, n, here the subset comprises n=15 pulses.

The first ten light-pulses in the train of modified light-pulses have a relatively low peak power, which in this example means less than 55% of the maximum peak power, here around 54% of the maximum peak power.

The last two light-pulses in the train of modified light-pulses have a relatively high peak power, which in this example means more than 65% of the maximum peak power, here around 76% of the maximum peak power.

From this example, it is seen that the first number of pulses, n₁, is larger than the second number of pulses, n₂, here by a factor of n₁/n₂=10/2=5.

The ten first pulses with relatively low peak power have a relatively long pulse width, but this cannot be seen from the figure. Also, the two last pulses with relatively high peak power have a relatively short pulse width, but this cannot be seen from the figure. However, due to the pulse widths as described above, the ten first pulses are calculated to be pulses with Nₘₐₓ and are responsible for generating primarily visible light. The two last pulses are calculated to be pulses with Nₘᵢₙ and are responsible for generating ultraviolet light.

Further, from this example, out of the 15 light-pulses, the remaining three light-pulses are defined by having intermediate soliton numbers, Nᵢₙₜ. These three light-pulses also have intermediate peak powers, which is between the low and high peak power as described above, which in this example means peak powers between 55% and 65% of the maximum peak power. The intermediate soliton number, Nᵢₙₜ, for these light-pulses vary. These pulses are responsible for also generating ultraviolet light.

The average power in the train of light pulses is indicated by the dashed line in **Fig. 2****.** This may be compared to a setup where the power is set to a constant peak power and/or constant pulse energy (un-modulated) scheme, which is indicated by the dotted line in **Fig. 2****,** showing constant peak powers of around 65.9% of the maximum peak power. In terms of pulse energy, the pulse energies of the light-pulses were kept constant at 58% of the maximum pulse energy. Accordingly, it is seen that the average power used in the presently disclosed (modulated) supercontinuum light-source is a bit lower (about 10 percent points) than using an un-modulated supercontinuum light-source. Accordingly, the presently discloses modulated supercontinuum light-source used less average power and may thus extend the life-time of the pulsed light source and/or the non-linear element(s).

### Example 3 - Generated spectrum

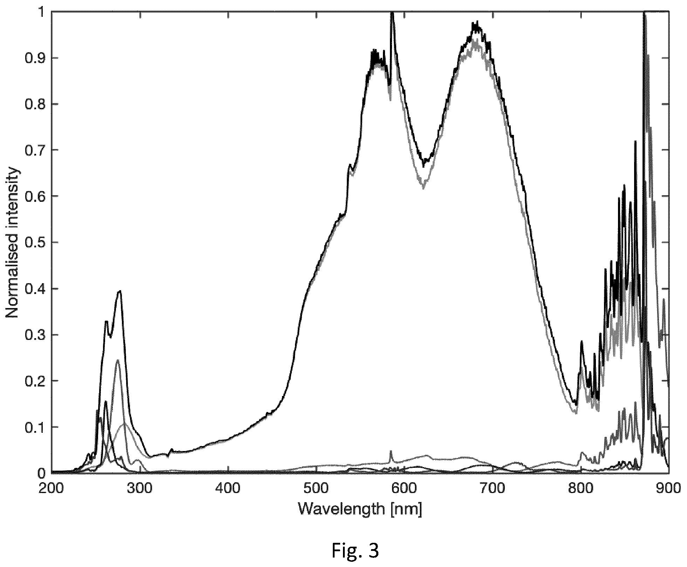

The pulse-modulation scheme as described in example 2 results in generating individual spectra and an averaged or composite modulated spectrum. **Fig. 3** shows an example of individual spectra and the composite modulated spectrum generated by the modified train of pulses as exemplified in **Fig. 2****.** The modulated spectrum (shown in black) and the individual spectra (orange, green, blue, and red) are shown with respect to normalized intensity. From **Fig. 3** it is seen that the measured spectrum ranges from around 210 nm (since the normalized intensity here is above zero) and up to 900 nm (since the normalized intensity here is also above zero). Nowhere in-between 210 nm and 900 is the normalized intensity zero. In other words, the entire spectrum has a measured non-zero normalized intensity-value, which therefore makes the spectrum ideal for scatterometry.

From **Fig. 3****,** it can also be seen that the light-pulses with relatively low energy are responsible for generating a spectrum (the orange curve) with wavelengths that are primarily in the visible domain. Further, the light-pulses with relatively high energy are responsible for generating a spectrum with wavelengths that spans into the UV-domain with a peak around 285 nm. Even further, the light-pulses with relatively low energy are responsible for generating a spectrum with wavelengths that spans into the IR-domain with a peak around 850 nm. Using light-pulses with only a relatively low energy (as shown here) is useful in many applications. Therefore, having additional pulses that vary only a little from the pulses with the relatively low energy, thus having a small dN, i.e. of less than 6%, is applicable for many applications. However, by increasing dN, thus providing additional pulses with different powers and/or energies, it is seen that light-pulses with relatively high energy are now responsible for generating spectra (the green, blue and red curves) with wavelengths that are primarily in the UV-domain and the IR-domain. As can be seen from Fig. 3, increasing the power of the light -pulses, i.e. by introducing additional light-pulses having relatively higher powers, provides spectra with peaks around 280 nm (the green curve), 277 nm (the blue curve) and 275 nm (the red curve). Accordingly, the pulses with the relatively high powers are firstly responsible for extending the average and/or measured spectrum into a lower region of the UV-domain.

To see further advantages of the proposed modulation, and thus the advantages of the generated spectrum, the normalized intensities in the entire spectrum (210 nm to 900 nm) may be compared to a spectrum that is generated by a non-modulated source, and a plasma lamp. Such a comparison is made in **Fig. 4****.**

In **Fig. 4(a)** is shown experimental data of a measured spectrum of a (modulated) supercontinuum light source according to the present disclosure (unbroken green curve), an un-modulated supercontinuum light-source (dotted and dashed orange curve), and a plasma arc lamp (dashed dark blue curve).

In **Fig. 4(b)** is shown the measured standard deviation across 250 spectra for a supercontinuum light source according to the present disclosure (unbroken green curve), an un-modulated supercontinuum light-source (dotted and dashed orange curve), and a plasma arc lamp (dashed dark blue curve). Each of the 250 spectra is measured using an integration time of 15 ms. In other words, the measured spectrum is provided by averaging over a time period of less than 1 second, which by definition is also the measured spectrum. Measuring the 250 spectra, is equivalent to having 3.75 seconds of integration time.

From **Fig. 4(a)****,** it is seen that the modulated supercontinuum light source according to the present disclosure has a measured spectrum (the unbroken green curve), which in comparison to the un-modulated light source (where dN=0), that on average is with higher intensities across the entire measured spectrum. More importantly, the spectrum produced by the un-modulated light source has local dips that drop below, or near the limit of, the dynamic range of the spectrometer, especially in the region between 300 nm and 400 nm, meaning it is not optimal for use in scatterometry applications. **Fig. 4(a)** here specifically shows that the measured spectrum from the modulated supercontinuum light source according to the present disclosure has been raised in comparison to an un-modulated supercontinuum light-source, making it for example more optimal for scatterometry applications.

Also, in comparison to a plasma lamp, the measured spectrum from the modulated supercontinuum light source according to the present disclosure extends both into the UV domain and IR domain, where the intensities are much higher, thus with much less SNR. **Fig. 4(a)** thus generally shows that the spectrum is both raised to above the noise floor of the given spectrometer, and that the spectrum is also extended in wavelength range.

From **Fig. 4(b)****,** it is seen that the modulated supercontinuum light source according to the present disclosure has a standard variation of the measured spectrum (the unbroken green curve), which in comparison to the un-modulated light source (where dN=0), is smaller across the entire measured spectrum. Thus, **Fig. 4(b)** specifically shows that the standard variation of the measured spectrum from the modulated supercontinuum light source according to the present disclosure has been lowered in comparison to that generated by an un-modulated supercontinuum light-source, but also in comparison to that by a plasma arc lamp, however predominantly for wavelengths in the UV domain and the IR domain.

### Example 4 - An embodiment of a supercontinuum light source according to the present disclosure

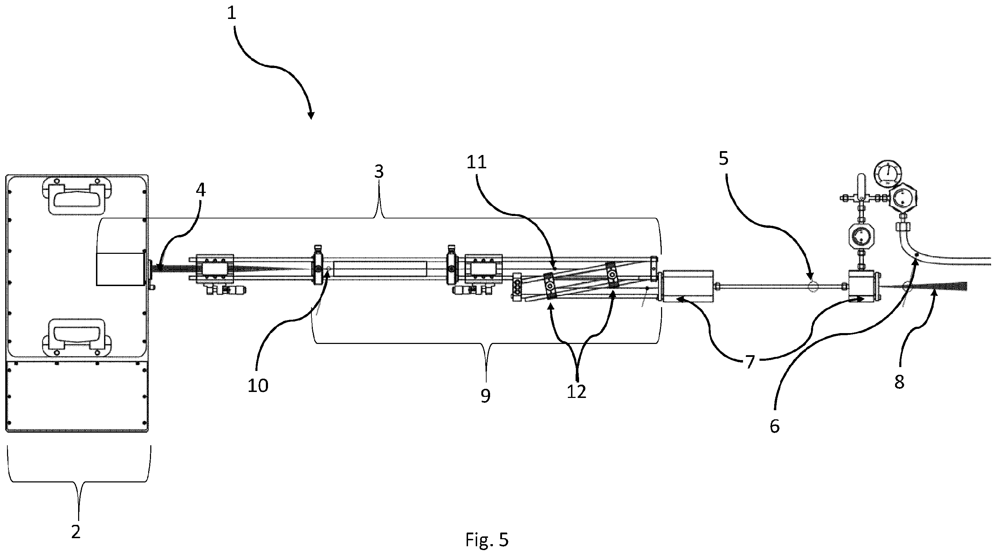

**Fig. 5** shows an embodiment of a supercontinuum light source **1** according to the present disclosure. The supercontinuum light source as shown in **Fig. 5** has been experimentally set up and used to produce the spectra of **Fig. 3** and **Fig. 4****,** thus having the modified light-pulses as shown in **Fig. 2****,** based on the understanding of the development of the spectrum as shown in **Fig. 1****.**

**In** **Fig. 5** is firstly shown the supercontinuum light source **1,** comprising a pulsed light source **2** configured to emit a train of light-pulses.

The supercontinuum light source **1** further comprises a modulation-module **3** configured to modulate the train of light-pulses, thereby producing a modified train of light-pulses **4,** wherein the modified train of light-pulses **4** comprises a plurality of modified light-pulses, wherein each of the plurality of modified light-pulses is defined by at least: a peak-power, P₀, and a pulse width, T₀. The modulation-module **3** is in this embodiment partly integrated in the pulses light source **2.**

The supercontinuum light source **1** further comprises a non-linear element **5** being defined by at least: a non-linear coefficient, γ, and a group-velocity dispersion parameter, β₂. In this embodiment, the non-linear element **5** comprises a hollow-core fiber, wherein the hollow-core fiber is filled with a gas. The gas is here supplied to the hollow-core fiber via a gas-supporting unit **6,** and a gas cell **7.** In this embodiment, the gas is Argon being pressurized to a pressure of more than 2 bars, in this example more than 4 bars, more specifically 4.3 bars (absolute pressure).

Each of the plurality of modified light-pulses is further defined by a soliton number, N, where N²= T₀²γ P₀/|β₂|.

The non-linear element **5** is configured to spectrally broadening the plurality of modified light-pulses, thereby generating a train of supercontinuum-pulses **8.**

The plurality of modified light-pulses entering the non-linear element **5** is defined by having: a maximum soliton-number, Nₘₐₓ, and a minimum soliton-number, Nₘᵢₙ. Further, in this example, the plurality of modified light-pulses is modified, by the modulation-module **3** such that the pulse soliton-modulation-depth, dN = (Nₘₐₓ-Nₘᵢₙ)/(Nₘₐₓ+ Nₘᵢₙ), is larger than 6%.

The modulation-module **3** further comprises a temporal compression stage **9** configured to modify the pulse width, T₀, of each of the pulses in the train of light-pulses or in the train of modified light-pulses. By this configuration, each of the pulses defined by Nₘᵢₙ has a first pulse width, T₁, and each of the pulses defined by Nₘₐₓ has a second pulse width, T₂, resulting in T₁ being different from T₂. In this example, the temporal compression stage **9** comprises an additional non-linear element, here another hollow-core fiber **10.** This hollow-core fiber **10** is configured to spectrally broadening the train of light-pulses emitted from the pulsed light source **2,** which in this example are the modified train of light-pulses **4.** By spectrally broadening, the second hollow-core fiber **10** introduces a linear chirp across the modified train of light-pulses **4.** The temporal compression stage **9** further comprises a chirp-compensator **11.** This chirp-compensator is configured to compensate for linear chirp and comprises two dispersive mirrors **12.**

The pulsed light source **2** in this embodiment operates at 100 kHz and provides light-pulses having a maximum pulse energy of 40 µJ. The light pulses originating from the pulsed light source **2** have a duration of 300 fs. The temporal compression stage **9** compresses the light-pulses in time down to below 100 fs.

The non-linear element, i.e. the first hollow-core fiber **5,** and the second hollow-core fiber **10,** are both anti-resonant (AR) hollow-core fibers with 7 capillaries.

The second hollow-core fiber **10** has an internal core diameter of 27µm, a capillary wall thickness of approximately 780nm, and a length of approximately 30cm. It is mounted open-ended in both ends, i.e., it is subject to ambient laboratory conditions.

The first hollow-core fiber **5** has a core diameter of 50µm, a capillary wall thickness of approximately 830nm, and a length of approximately 30cm.

The setup as described here was also used to produce the data for the un-modulated supercontinuum light source, as shown in **Fig. 4****,** but with the modulation-module turned off. As described in relation to **Fig. 2****,** the energies of the pulses in the un-modulated supercontinuum light source were kept constant at 65.9% of the maximum pulse energy, corresponding to pulse energies of 26.4µJ.

## Claims

1. A supercontinuum light source, comprising:
- a pulsed light source configured to emit a train of light-pulses;
- a modulation-module configured to modulate the train of light-pulses, thereby producing a modified train of light-pulses, wherein the modified train of light-pulses comprises a plurality of modified light-pulses, wherein each of the plurality of modified light-pulses is defined by at least:
∘ a peak-power, P₀, and
∘ a pulse width, T₀, and;
- one or more non-linear element(s) being defined by at least:
∘ a non-linear coefficient, γ, and
∘ a group-velocity dispersion parameter, β₂,
whereby each of the plurality of modified light-pulses entering the non-linear element(s) is defined by:
∘ a soliton number, N, where N²= T₀²γ P₀/|β₂|,
wherein said non-linear element(s) is/are configured to spectrally broadening the plurality of modified light-pulses, thereby generating a train of supercontinuum-pulses, and
wherein the plurality of modified light-pulses entering the non-linear element(s) is further defined by having:
∘ a maximum soliton-number, Nₘₐₓ, and
∘ a minimum soliton-number, Nₘᵢₙ, and
wherein the plurality of modified light-pulses is modified such that:
∘ the pulse soliton-modulation-depth, $dN = \left({N}_{max}-{N}_{min}\right) / \left({N}_{max}+{N}_{min}\right) ,$ is larger than 6%.

2. The supercontinuum light source according to claim 1, wherein the one or more non-linear element(s) comprises a hollow-core fiber, and wherein the hollow-core fiber is filled with a gas.

3. The supercontinuum light source according to any of the preceding claims, wherein the modulation-module comprises a temporal compression stage configured to modify the pulse width, T₀, of each of the pulses in the train of light-pulses or in the train of modified light-pulses, whereby each of the pulses defined by Nₘᵢₙ has a first pulse width, T₁, and whereby each of the pulses defined by Nₘₐₓ has a second pulse width, T₂, wherein T₁ is different from T₂.

4. The supercontinuum light source according to claim 3, wherein the first pulse width, T₁, is smaller than the second pulse width, T₂.

5. The supercontinuum light source according to claim 3, wherein the first pulse width, T₁, and the second pulse width, T₂, are between 1 fs and 1000 fs.

6. The supercontinuum light source according to claim 3, wherein the first pulse width, T₁, and the second pulse width, T₂, are modified such that each of the light-pulses defined by Nₘₐₓ are spectrally broadened primarily into the visible domain, and such that each of the pulses defined by Nₘᵢₙ are spectrally broadened into the ultraviolet domain.

7. The supercontinuum light source according to claim 6, wherein the visible domain and ultraviolet domain being generated by the spectral broadening combines to an extended spectrum that ranges from around 210 nm or less, and up to at least 900 nm.

8. The supercontinuum light source according to any of the preceding claims, wherein dN is larger than 10%.

9. The supercontinuum light source according to claim 8, wherein dN is smaller than 45%.

10. The supercontinuum light source according to any of the preceding claims, wherein dN is responsible for generating the train of supercontinuum-pulses with wavelengths ranging from around 210 nm or less, and up to at least 900 nm.

11. The supercontinuum light source according to any of the preceding claims, wherein the light-pulses in the plurality of modified light-pulses are separated from each other by a time span, which is larger than the shortest pulse width in the plurality of modified light-pulses.

12. The supercontinuum light source according to any of the preceding claims, wherein the plurality of modified light-pulses is defined by a repetitive pattern having a subset of pulses, n, such that the subset of pulses, n, comprises one or more pulses, n₁, said pulses being defined by Nₘₐₓ, and one or more pulses, n₂, said pulses being defined by Nₘᵢₙ.

13. The supercontinuum light source according to claim 12, wherein the subset of pulses, n, is between n=10 and n=20 pulses, and/or wherein the first number of pulses, n₁, is larger than the second number of pulses, n₂.

14. A scatterometry device, comprising:
- the supercontinuum light source according to any of the claims 1-13; and
- a spectrometer configured to measure the spectrum of the train of super-continuum-pulses, whereby a measured spectrum is provided.

15. The device according to claim 14, wherein the device is configured to hold an object to be analyzed by scatterometry such that the train of supercontinuum-pulses are guided from the one or more non-linear element(s) and onto the object, wherefrom the train of supercontinuum-pulses are further guided into the spectrometer.

## Patentansprüche

1. Superkontinuum-Lichtquelle, umfassend:
- eine Quelle gepulsten Lichts, die dazu ausgelegt ist, eine Folge von Lichtimpulsen zu emittieren;
- ein Modulationsmodul, das dazu ausgelegt ist, die Folge von Lichtimpulsen zu modulieren, wodurch eine modifizierte Folge von Lichtimpulsen erzeugt wird, wobei die modifizierte Folge von Lichtimpulsen eine Mehrzahl von modifizierten Lichtimpulsen umfasst, wobei jeder der Mehrzahl von modifizierten Lichtimpulsen mindestens definiert ist durch:
∘ eine Spitzenleistung, P0, und
∘ eine Impulsbreite, T0, und;
∘ -ein oder mehrere nichtlineare Elemente, die mindestens definiert sind durch:
∘ einen nichtlinearen Koeffizienten, y, und
∘ einen Gruppengeschwindigkeitsdispersionsparameter, β2,
∘ wobei jeder der Mehrzahl von modifizierten Lichtimpulsen, die in das eine oder die mehreren nichtlinearen Elemente eintreten, definiert ist durch:
∘ eine Solitonzahl, N, wobei N2 = T02γ P0 /|β₂|,
∘ wobei das eine oder die mehreren nichtlinearen Elemente dazu ausgelegt sind, die Mehrzahl von modifizierten Lichtimpulsen spektral zu verbreitern, wodurch eine Folge von Superkontinuum-Impulsen erzeugt wird, und
∘ wobei die Mehrzahl von modifizierten Lichtimpulsen, die in das eine oder die mehreren nichtlinearen Elemente eintreten, ferner dadurch definiert ist, dass sie aufweist:
∘ eine maximale Solitonzahl, Nmax, und
∘ eine minimale Solitonzahl, Nmin, und
∘ wobei die Mehrzahl von modifizierten Lichtimpulsen derart modifiziert ist, dass:
∘ die Impuls-Soliton-Modulationstiefe,
∘ $dN = \left(Nmax-Nmin\right) / \left(Nmax+Nmin\right) ,$ größer als 6 % ist.

2. Superkontinuum-Lichtquelle nach Anspruch 1, wobei das eine oder die mehreren nichtlinearen Elemente eine Hohlkernfaser umfassen, und wobei die Hohlkernfaser mit einem Gas gefüllt ist.

3. Superkontinuum-Lichtquelle nach einem der vorhergehenden Ansprüche, wobei das Modulationsmodul eine zeitliche Kompressionsstufe umfasst, die dazu ausgelegt ist, die Impulsbreite, T₀, jedes der Impulse in der Folge von Lichtimpulsen oder in der Folge von modifizierten Lichtimpulsen zu modifizieren, wobei jeder der durch Nₘᵢₙ definierten Impulse eine erste Impulsbreite, T₁, aufweist und wobei jeder der durch Nₘₐₓ definierten Impulse eine zweite Impulsbreite, T₂, aufweist, wobei T₁ von T₂ verschieden ist.

4. Superkontinuum-Lichtquelle nach Anspruch 3, wobei die erste Impulsbreite, T₁, kleiner als die zweite Impulsbreite, T₂, ist.

5. Superkontinuum-Lichtquelle nach Anspruch 3, wobei die erste Impulsbreite, T₁, und die zweite Impulsbreite, T₂, zwischen 1 fs und 1000 fs liegen.

6. Superkontinuum-Lichtquelle nach Anspruch 3, wobei die erste Impulsbreite, T₁, und die zweite Impulsbreite, T₂, derart modifiziert sind, dass jeder der durch Nₘₐₓ definierten Lichtimpulse primär in den sichtbaren Bereich spektral verbreitert wird und dass jeder der durch Nₘᵢₙ definierten Impulse in den ultravioletten Bereich spektral verbreitert wird.

7. Superkontinuum-Lichtquelle nach Anspruch 6, wobei der durch die spektrale Verbreiterung erzeugte sichtbare Bereich und ultraviolette Bereich sich zu einem erweiterten Spektrum verbinden, das von etwa 210 nm oder weniger bis zu mindestens 900 nm reicht.

8. Superkontinuum-Lichtquelle nach einem der vorhergehenden Ansprüche, wobei dN größer als 10 % ist.

9. Superkontinuum-Lichtquelle nach Anspruch 8, wobei dN kleiner als 45 % ist.

10. Superkontinuum-Lichtquelle nach einem der vorhergehenden Ansprüche, wobei dN dafür verantwortlich ist, die Folge von Superkontinuum-Impulsen mit Wellenlängen zu erzeugen, die von etwa 210 nm oder weniger bis zu mindestens 900 nm reichen.

11. Superkontinuum-Lichtquelle nach einem der vorhergehenden Ansprüche, wobei die Lichtimpulse in der Mehrzahl von modifizierten Lichtimpulsen durch eine Zeitspanne voneinander getrennt sind, die größer als die kürzeste Impulsbreite in der Mehrzahl von modifizierten Lichtimpulsen ist.

12. Superkontinuum-Lichtquelle nach einem der vorhergehenden Ansprüche, wobei die Mehrzahl von modifizierten Lichtimpulsen durch ein repetitives Muster mit einer Teilmenge von Impulsen, n, definiert ist, derart dass die Teilmenge von Impulsen, n, einen oder mehrere Impulse, n₁, umfasst, wobei die Impulse durch Nₘₐₓ definiert sind, und einen oder mehrere Impulse, n₂, wobei die Impulse durch Nₘᵢₙ definiert sind.

13. Superkontinuum-Lichtquelle nach Anspruch 12, wobei die Teilmenge von Impulsen, n, zwischen n = 10 und n = 20 Impulsen liegt, und/oder wobei die erste Anzahl von Impulsen, n₁, größer als die zweite Anzahl von Impulsen, n₂, ist.

14. Streuungsmessvorrichtung, umfassend:
- die Superkontinuum-Lichtquelle nach einem der Ansprüche 1 bis 13; und
- ein Spektrometer, das dazu ausgelegt ist, das Spektrum der Folge von Superkontinuum-Impulsen zu messen, wodurch ein gemessenes Spektrum bereitgestellt wird.

15. Vorrichtung nach Anspruch 14, wobei die Vorrichtung dazu ausgelegt ist, ein durch Streuungsmessung zu analysierendes Objekt so zu halten, dass die Folge von Superkontinuum-Impulsen von dem einen oder den mehreren nichtlinearen Elementen und auf das Objekt geleitet wird, von wo aus die Folge von Superkontinuum-Impulsen weiter in das Spektrometer geleitet wird.

## Revendications

1. Source de lumière supercontinuum, comprenant :
- une source de lumière pulsée configurée pour émettre un train d'impulsions de lumière ;
- un module de modulation configuré pour moduler le train d'impulsions de lumière, produisant ainsi un train modifié d'impulsions de lumière, dans lequel le train modifié d'impulsions de lumière comprend une pluralité d'impulsions de lumière modifiées, dans laquelle chacune de la pluralité d'impulsions de lumière modifiées est définie par au moins :
∘ une puissance de crête, P₀, et
∘ une largeur d'impulsion, T₀, et ;
- un ou plusieurs éléments non linéaires étant définis par au moins :
∘ un coefficient non linéaire, γ, et
∘ un paramètre de dispersion de vitesse de groupe, β₂, moyennant quoi chacune de la pluralité d'impulsions de lumière modifiées entrant dans les un ou plusieurs éléments non linéaires est définie par :
∘ un nombre de solitons, N, où N²= T₀²γ P₀/|β₂|,
dans laquelle lesdits un ou plusieurs éléments non linéaires sont configurés pour élargir spectralement la pluralité d'impulsions de lumière modifiées, générant ainsi un train d'impulsions supercontinuum, et
dans laquelle la pluralité d'impulsions de lumière modifiées entrant dans les un ou plusieurs éléments non linéaires est en outre définie comme ayant :
∘ un nombre de solitons maximum, Nₘₐₓ, et
∘ un nombre de solitons minimum, Nₘᵢₙ, et
dans laquelle la pluralité d'impulsions de lumière modifiées est modifiée de sorte que :
∘ la profondeur de modulation de soliton d'impulsion, $dN = \left({N}_{max}-{N}_{min}\right) / \left({N}_{max}+{N}_{min}\right) ,$
est supérieure à 6 %.

2. Source de lumière supercontinuum selon la revendication 1, dans laquelle les un ou plusieurs éléments non linéaires comprennent une fibre à cœur creux, et dans laquelle la fibre à cœur creux est remplie d'un gaz.

3. Source de lumière supercontinuum selon l'une quelconque des revendications précédentes, dans laquelle le module de modulation comprend un étage de compression temporelle configuré pour modifier la largeur d'impulsion, T₀, de chacune des impulsions dans le train d'impulsions de lumière ou dans le train d'impulsions de lumière modifiées, moyennant quoi chacune des impulsions définies par Nₘᵢₙ a une première largeur d'impulsion, T₁, et moyennant quoi chacune des impulsions définies par Nmax a une seconde largeur d'impulsion, T₂, dans laquelle T₁ est différente de T₂.

4. Source de lumière supercontinuum selon la revendication 3, dans laquelle la première largeur d'impulsion, T₁, est inférieure à la seconde largeur d'impulsion, T₂.

5. Source de lumière supercontinuum selon la revendication 3, dans laquelle la première largeur d'impulsion, T₁, et la seconde largeur d'impulsion, T₂, sont comprises entre 1 fs et 1000 fs.

6. Source de lumière supercontinuum selon la revendication 3, dans laquelle la première largeur d'impulsion, T₁, et la seconde largeur d'impulsion, T₂, sont modifiées de sorte que chacune des impulsions de lumière définies par Nₘₐₓ est élargie spectralement principalement dans le domaine visible, et de sorte que chacune des impulsions définies par Nₘᵢₙ est élargie spectralement dans le domaine ultraviolet.

7. Source de lumière supercontinuum selon la revendication 6, dans laquelle le domaine visible et le domaine ultraviolet générés par l'élargissement spectral se combinent en un spectre étendu qui s'étend d'environ 210 nm ou moins, jusqu'à au moins 900 nm.

8. Source de lumière supercontinuum selon l'une quelconque des revendications précédentes, dans laquelle dN est supérieure à 10 %.

9. Source de lumière supercontinuum selon la revendication 8, dans laquelle dN est inférieure à 45 %.

10. Source de lumière supercontinuum selon l'une quelconque des revendications précédentes, dans laquelle dN est responsable de la génération du train d'impulsions supercontinuum avec des longueurs d'onde s'étendant d'environ 210 nm ou moins, jusqu'à au moins 900 nm.

11. Source de lumière supercontinuum selon l'une quelconque des revendications précédentes, dans laquelle les impulsions de lumière de la pluralité d'impulsions de lumière modifiées sont séparées les unes des autres par un intervalle de temps, qui est supérieur à la largeur d'impulsion la plus courte de la pluralité d'impulsions de lumière modifiées.

12. Source de lumière supercontinuum selon l'une quelconque des revendications précédentes, dans laquelle la pluralité d'impulsions de lumière modifiées est définie par un motif répétitif ayant un sous-ensemble d'impulsions, n, de sorte que le sous-ensemble d'impulsions, n, comprend une ou plusieurs impulsions, n₁, lesdites impulsions étant définies par Nₘₐₓ, et une ou plusieurs impulsions, n₂, lesdites impulsions étant définies par Nₘᵢₙ.

13. Source de lumière supercontinuum selon la revendication 12, dans laquelle le sous-ensemble d'impulsions, n, est compris entre n=10 et n=20 impulsions, et/ou dans laquelle le premier nombre d'impulsions, n₁, est supérieur au second nombre d'impulsions, n₂.

14. Dispositif de diffusiométrie, comprenant :
- la source de lumière supercontinuum selon l'une quelconque des revendications 1 à 13 ; et
- un spectromètre configuré pour mesurer le spectre du train d'impulsions supercontinuum, moyennant quoi un spectre mesuré est fourni.

15. Dispositif selon la revendication 14, dans lequel le dispositif est configuré pour maintenir un objet devant être analysé par diffusiométrie de sorte que le train d'impulsions supercontinuum est guidé depuis les un ou plusieurs éléments non linéaires et sur l'objet, à partir duquel le train d'impulsions supercontinuum est en outre guidé dans le spectromètre.
